# EUROPÄISCHE PATENTSCHRIFT

(11) **EP 3 661 777 B1**
(45) Veröffentlichungstag und Bekanntmachung des Hinweises auf die Patenterteilung: **20.04.2022**
(21) Anmeldenummer: 18737540.7
(22) Anmeldetag: 27.06.2018
(51) Int. Cl.: B60J 7/00

(54) **ROLLOANORDNUNG MIT FÜHRUNGSBÄNDERN FÜR ROLLOBAHN**
ROLLER BLIND ARRANGEMENT WITH GUIDE STRIPS FOR ROLLER BLIND MATERIAL
ENSEMBLE STORE DOTÉ DE BANDES DE GUIDAGE POUR BANDE DE STORE

(30) Priorität: 03.08.2017 DE 102017117632; 24.01.2018 DE 102018101557
(43) Veröffentlichungstag der Anmeldung: 10.06.2020
(73) Patentinhaber: Webasto SE, 82131 Stockdorf (DE)
(72) Erfinder: DIETL, Rudolf, 82131 Stockdorf (DE); STEINBERGER, Andreas, 82131 Stockdorf (DE); STEINER, Erwin, 82131 Stockdorf (DE); JOSWIG, Patrick, 82131 Stockdorf (DE)
(74) Vertreter: advotec.
(86) Internationale Anmeldenummer: PCT/EP2018/067293
(87) Internationale Veröffentlichungsnummer: WO 2019/025085

(56) Entgegenhaltungen:
- EP-A1- 2 447 098
- EP-B1- 2 580 077
- WO-A2-2014/191283
- DE-A1- 19 739 919
- DE-A1-102006 003 983
- DE-A1-102007 002 857
- DE-A1-102007 041 298
- DE-A1-102007 041 298
- DE-A1-102011 113 207
- DE-A1-102012 201 256
- DE-B3-102010 054 590
- DE-U1-202007 001 909
- DE-U1-202007 001 909
- US-A1- 2017 087 966

## Beschreibung

Die Erfindung betrifft eine Rolloanordnung eines Kraftfahrzeuges, insbesondere eines Fahrzeugdachs, mit den Merkmalen des Oberbegriffs des Patentanspruchs 1.

Eine derartige Rolloanordnung ist aus der Druckschrift US 2017/0087966 A1 bekannt und stellt ein seitengeführtes Rollo dar, das als Beschattungsanordnung eines Fahrzeugdachs eingesetzt werden kann, das mindestens ein transparentes Dachelement, insbesondere einen transparenten Schiebedachdeckel aufweist. Die bekannte Rolloanordnung umfasst eine Rollobahn aus einem flexiblen, aufwickelbaren Material, die an einem heckseitigen Rand einer Dachöffnung, die mittels des transparenten Deckelelements verschließbar ist, zu einem Rollowickel aufwickelbar ist. Um die Rollobahn an ihren Seitenrändern führen zu können, umfasst die Rolloanordnung zwei Führungsschienen, die jeweils eine Führungsbahn aufweisen, in der ein jeweiliges seitliches Führungsband der Rollobahn geführt ist. Die beiden Führungsschienen sind Bestandteil eines Rahmens und über ein Rahmenquerteil miteinander verbunden, an dem sich der Rollowickel beim Aufwickeln des Rollos ausbildet. Die beiden Führungsschienen sind in der Regel jeweils aus einem Aluminiumstrangpressprofil gebildet, wohingegen das Rahmenquerteil ein Kunststoffspritzgießteil sein kann. Wenn die Rollobahn zum Beschatten des transparenten Dachabschnitts von ihrem Rollowickel abgewickelt wird, laufen die Führungsbänder in die zugeordneten Führungsbahnen der Führungsschienen ein. Beim Aufwickeln zu dem Rollowickel laufen die von den Führungsbändern gebildeten Ränder der Rollobahn aus den Führungsbahnen der Führungsschienen aus. Die Führungsbahnen sind oben jeweils durch Führungsrippen begrenzt, welche das jeweilige Führungsband in der betreffenden Führungsbahn hält. Zudem erfolgt durch die in den Führungsbahnen gehaltenen Führungsbänder eine Zentrierung der Rollobahn in Rolloquerrichtung.

Aus der Druckschrift DE 20 2007 001 909 U1 ist eine Rolloanordnung für ein Kraftfahrzeug bekannt, die eine Rollobahn mit einer Seitenführung aufweist.

Aus der Druckschrift DE 10 2007 041 298 A1 ist eine Rolloanordnung für ein Kraftfahrzeug bekannt, die eine Rollobahn mit einer Seitenführung aufweist.

Aus der Druckschrift DE 10 2007 002 857 A1 ist eine Rolloanordnung für eine Fensteröffnung eines Kraftfahrzeugs bekannt. Die Rolloanordnung umfasst eine Rollobahn und seitliche Führungsschienen.

Aus der Druckschrift DE 10 2011 113 207 A1 ist eine Fahrzeugrolloanordnung bekannt, die eine Rollobahn aufweist, die über seitliche Führungsbänder in Führungsschienen geführt ist.

Aus der Druckschrift DE 10 2006 003 983 A1 ist eine Sonnenblenden-Vorrichtung bekannt, welche eine Rollobahn aufweist, die in seitlichen Gleitschienen geführt ist. Aus der Druckschrift DE 197 39 919 A1 ist ein Sonnenrollo für ein Kraftfahrzeugdach bekannt, das mit einer Seitenführung für eine Rollobahn versehen ist.

Druckschrift WO 2014/191283 A3 lehrt eine Rolloanordnung mit einer Rollobahn, die seitliche Führungsbänder aufweist, die in Führungsschienen geführt sind.

Aus der Druckschrift DE 10 2012 201 256 A1 ist eine Sonnenschutzanordnung für ein Kraftfahrzeug bekannt, die nach Art einer Rolloanordnung mit einem seitengeführten Rollo ausgebildet ist.

Druckschrift EP 2 447 098 A1 lehrt eine Rolloanordnung für ein Fahrzeugdach mit Führungsschienen für eine Rollobahn.

Aus der Druckschrift DE 10 2010 054 590 B3 ist ein Rahmen eines öffnungsfähigen-Fahrzeugdachs bekannt, an dem ein Beschattungselement geführt werden kann.

Aus der Druckschrift EP 2 580 077 B1 ist ein Fahrzeugfenster mit integriertem Rollo und einer Seitenführung für das Rollo bekannt.

Der Erfindung liegt die Aufgabe zugrunde, eine gemäß der einleitend genannten Gattung ausgebildete Rolloanordnung zu schaffen, bei der eine Zentrierung der Rollobahn schon vor dem Einlaufen der Führungsbänder in die Führungsbahnen der Führungsschienen erfolgt.

Diese Aufgabe ist erfindungsgemäß durch die Rolloanordnung mit den Merkmalen des Patentanspruchs 1 gelöst.

Gemäß der vorliegenden Erfindung wird also vorgeschlagen, dass einerseits die Führungsschienen jeweils eine glatt geschnittene, an das Rahmenquerteil grenzende Stirnseite haben, wodurch eine einfache und kostengünstige Herstellung der aus Strangpressprofilen gefertigten Führungsschienen möglich ist, und andererseits das Rahmenquerteil, das mit den Führungsschienen verbunden ist, für jede Führungsschiene ein Bandeinlaufelement aufweist, das eine Einlaufbahn für das betreffende Führungsband bildet, die durch mindestens eine bezogen auf die Längsmittelebene innere Halterippe und mindestens eine bezogen auf die Längsmittelebene äußere Halterippe für das Führungsband definiert ist und die in die Führungsbahn der betreffenden Führungsschiene übergeht. Damit ist eine Geometrie für eine Rollobahn- bzw. Stoffführung in das Rahmenquerteil integriert, die es ermöglicht, dass die Rollobahn bei der Montage der Rolloanordnung in das Rahmenquerteil integriert wird, bevor dieses mit den Führungsschienen verbunden wird. Die Führungsschienen können dann parallel zu ihrer Längserstreckung, bei einem Fahrzeugdach in der Regel in Fahrzeuglängsrichtung, mit dem Rahmenquerteil verbunden werden. Eine Montagerichtung quer zur Erstreckung der Führungsschienen ist nicht erforderlich. Dies erleichtert die Montage der Rolloanordnung.

Bei der Rolloanordnung nach der Erfindung sind die Bandeinlaufelemente jeweils über eine Haltewand mit einem Grundkörper des Rahmenquerteils verbunden und der Grundkörper und die Bandeinlaufelemente mit den Haltewänden in einstückiger Weise als Kunststoffspritzgießteil ausgebildet.

Bei einer zweckmäßigen Ausführungsform der Rolloanordnung nach der Erfindung sind die Haltewände verformbar, insbesondere elastisch verformbar. Durch Verformung der Haltewände kann ein Toleranzausgleich zwischen den Bandeinlaufelementen und den Führungsschienen erreicht werden.

Bei einer bevorzugten Ausführungsform haben die Haltewände in Führungsschienenlängsrichtung jeweils einen wellenförmigen Querschnitt, der es ermöglicht Toleranzen zwischen den Bandeinlaufelementen und den Führungsschienen, insbesondere in Führungsschienenlängsrichtung und in Führungsschienenhochrichtung, auszugleichen.

Beispielsweise haben die Haltewände eine maximale Wandstärke von etwa 4 mm, so dass durch Wahl eines entsprechenden Kunststoffs stets eine elastische Verformbarkeit der Haltewände gewährleistet ist.

Um die Position der Bandeinlaufelemente an den Führungsschienen eindeutig zu definieren, weisen die Bandeinlaufelemente bei einer bevorzugten Ausführungsform der Rolloanordnung nach der Erfindung jeweils mindestens ein Arretierelement auf, das in die betreffende Führungsschiene eingreift. Beispielsweise ist das Arretierelement ein laschenartiger Vorsprung, der an einer Wand oder einem Steg der betreffenden Führungsschiene anliegt.

Das Arretierelement kann beispielsweise ein Stift sein und an den Führungsschienen kann jeweils eine dem Stift entsprechende Aufnahme ausgebildet sein. Dies ermöglicht es, die Bandeinlaufelemente und die Führungsschienen jeweils exakt zueinander zu positionieren.

Bei einer alternativen Ausführungsform kann das Arretierelement ein Rastelement sein. An den Führungsschienen kann dann jeweils ein korrespondierendes Rastgegenelement für das Rastelement ausgebildet sein. Das Rastgegenelement ist beispielsweise eine Rastnase und/oder eine Rastausnehmung.

Hierdurch sind bei einer Montage keine zusätzlichen Bauteile zur Fixierung der Führungsschienen an den Bandeinlaufelementen erforderlich. Zudem gibt ein Verrasten der Rastelemente an den Rastgegenelementen eine direkte Rückmeldung an einen Monteur, ob die Führungsschienen korrekt an den Bandeinlaufelementen fixiert sind.

Um Übergangsbereiche zwischen den Führungsschienen und dem Rahmenquerteil abzudichten, der im Nassbereich des betreffenden Fahrzeugs liegt, ist bei einer zweckmäßigen Ausführungsform der Rolloanordnung nach der Erfindung zwischen den glatt geschnittenen Stirnseiten der Führungsschienen und dem Rahmenquerteil jeweils ein Dichtelement angeordnet. Das Dichtelement kann eine Butyl-Dichtung sein, welche die wasserführenden Bereiche der Anordnung abdichtet.

Das Rahmenquerteil der Rolloanordnung ist vorzugsweise ein Kunststoffspritzgießteil aus glasfaserverstärktem Kunststoff. Das Bandeinlaufelement ist vorzugsweise einstückig an dem Kunststoffspritzgießteil ausgebildet.

Die Führungsschienen der Rolloanordnung nach der Erfindung sind zweckmäßigerweise jeweils aus einem Aluminiumstrangpressprofil gebildet. Vor dem Anbinden an das Rahmenquerteil müssen die Aluminiumstrangpressprofile nur in einfacher Weise glatt abgeschnitten bzw. abgelängt werden.

Weitere Vorteile und vorteilhafte Ausgestaltungen des Gegenstandes der Erfindung sind der Beschreibung, der Zeichnung und den Patentansprüchen entnehmbar.

Zwei Ausführungsbeispiele einer Rolloanordnung nach der Erfindung sind in der Zeichnung schematisch vereinfacht dargestellt und werden in der nachfolgenden Beschreibung näher erläutert. Es zeigt:
- Figur 1: eine perspektivische Draufsicht auf ein Fahrzeugdach mit einer Rolloanordnung nach der Erfindung;
- Figur 2: eine vergrößerte Ansicht der ersten Ausführungsform der Rolloanordnung in einem Bereich II in Figur 1;
- Figur 3: eine Figur 2 entsprechende Ansicht der ersten Ausführungsform der Rolloanordnung, jedoch ohne Darstellung einer Rollobahn;
- Figur 4: eine Draufsicht auf den in Figur 3 dargestellten Bereich der ersten Ausführungsform der Rolloanordnung;
- Figur 5: eine Draufsicht auf ein Rahmenquerteil der ersten Ausführungsform der Rolloanordnung im Bereich eines Bandeinlaufelements;
- Figur 6: eine perspektivische Darstellung des Bandeinlaufelements der ersten Ausführungsform der Rolloanordnung;
- Figur 7: einen Schnitt durch die erste Ausführungsform der Rolloanordnung entlang der Linie VII-VII in Figur 2;
- Figur 8: einen Schnitt durch die erste Ausführungsform der Rolloanordnung entlang der Linie VIII-VIII in Figur 2;
- Figur 9: eine vergrößerte Ansicht einer zweiten Ausführungsform einer Rolloanordnung in einem Bereich II in Figur 1, jedoch in einem VormontageZustand;
- Figur 10: eine perspektivische Unteransicht des in Figur 9 dargestellten Bereichs der zweiten Ausführungsform der Rolloanordnung im VormontageZustand;
- Figur 11: eine Draufsicht auf den in Figur 9 dargestellten Bereich der zweiten Ausführungsform der Rolloanordnung im Vormontage-Zustand;
- Figur 12: ein Schnitt durch die zweite Ausführungsform der Rolloanordnung entlang der Linie XII-XII in Figur 11.
- Figur 13: eine Draufsicht auf den in Figur 9 dargestellten Bereich der zweiten Ausführungsform der Rolloanordnung im montierten Zustand;
- Figur 14: ein Schnitt durch die zweite Ausführungsform der Rolloanordnung im montierten Zustand entlang der Linie XIV-XIV in Figur 13.

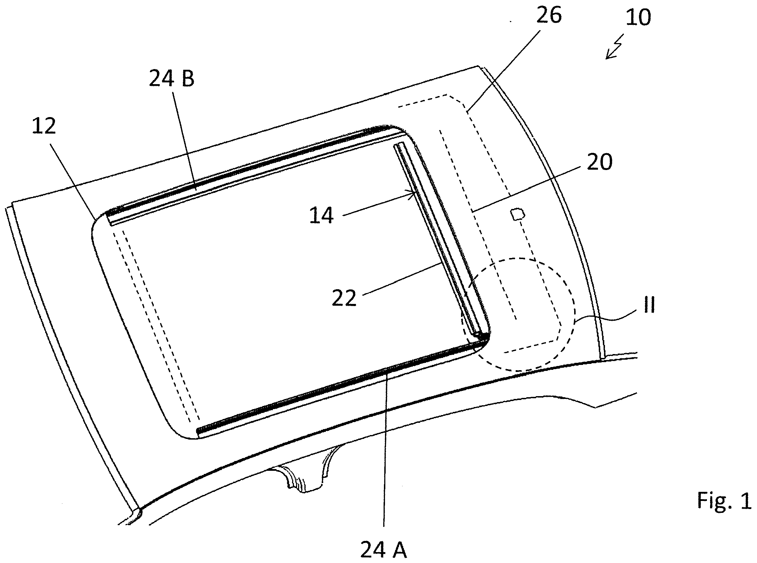

In Figur 1 ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements geschlossen oder zumindest teilweise freigegeben werden kann.

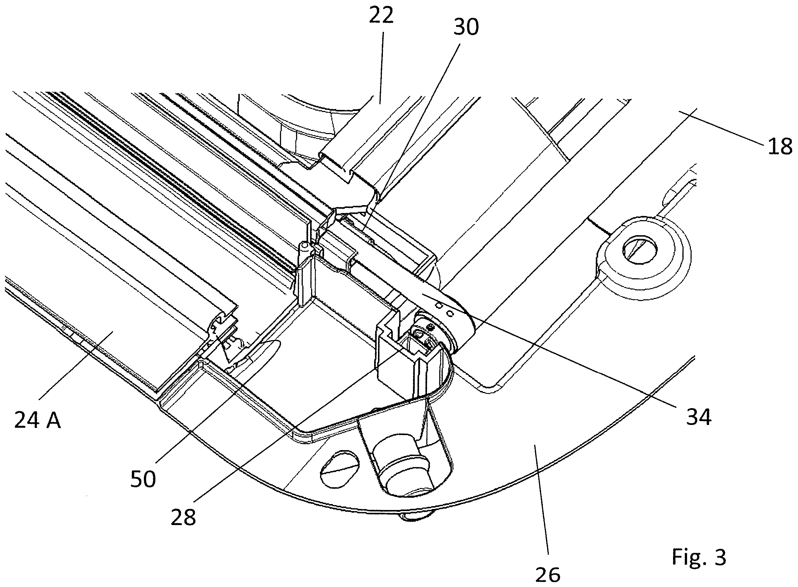

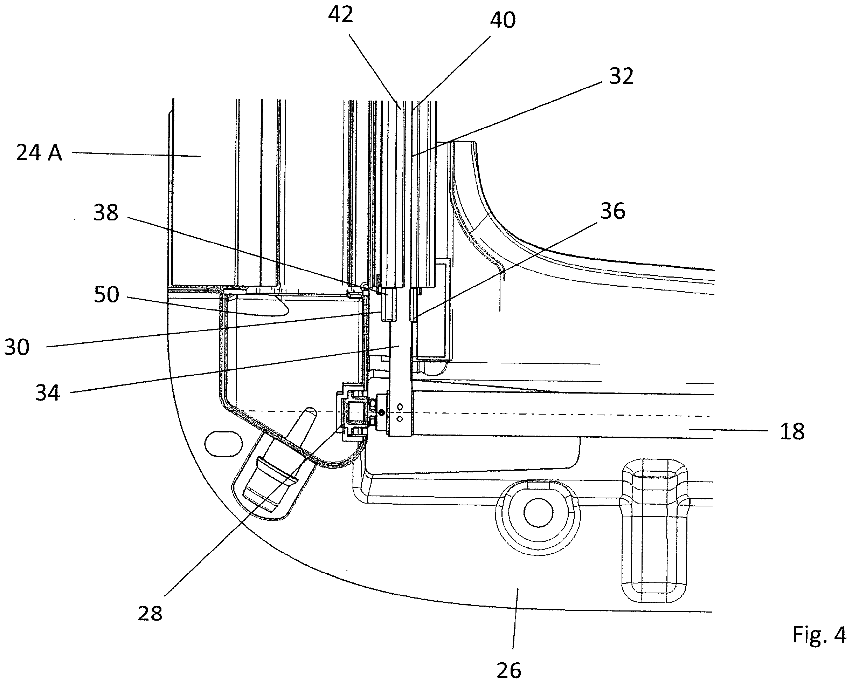

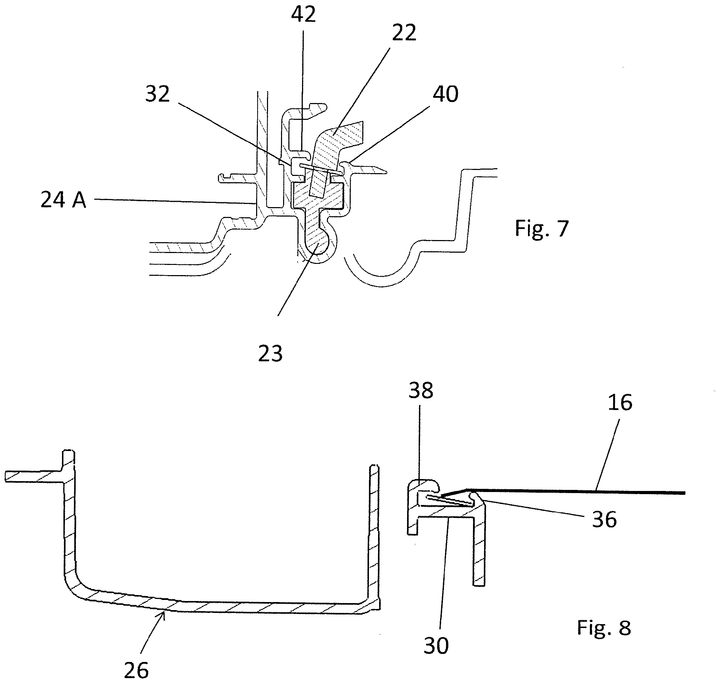

Um einen Fahrzeuginnenraum des Personenkraftwagens vor durch den Dachausschnitt bzw. das transparente Deckelelement einfallendem Licht schützen zu können, weist das Fahrzeugdach 10 eine Beschattungseinrichtung auf, die als Rolloanordnung 14 ausgebildet ist von der in den Figuren 1 bis 8 eine erste Ausführungsform dargestellt ist. Die Rolloanordnung 14 bildet ein seitengeführtes Rollo mit einer Rollobahn 16, die im Bereich eines heckseitigen Randes des Dachausschnitts 12 auf einer Wickelwelle 18 zu einem Rollowickel 20 aufwickelbar ist. An ihrem dem Rollowickel 20 abgewandten, sich in Dachquerrichtung erstreckenden Rand ist die Rollobahn 16 mit einem Zugspriegel 22 versehen, der als Betätigungselement der Rollobahn 16 dient.

Zur Seitenführung der Rollobahn 16 weist die Rolloanordnung 14 bezogen auf eine vertikale Dachlängsmittelebene beidseits jeweils eine Führungsschiene 24A bzw. 24B auf, die sich entlang des jeweiligen Seitenrandes des Dachausschnitts 12 erstreckt. Die Führungsschienen 24A und 24B sind jeweils aus einem Aluminiumwerkstoff gefertigt und stellen jeweils ein Strangpressprofil dar. Der Zugspriegel 22 ist über Gleiter 23 in den Führungsschienen 24A und 24B geführt.

Die Rolloanordnung 14 umfasst des Weiteren ein sich in Dachquerrichtung erstreckendes Rahmenquerteil 26, das entlang des heckseitigen Randes des Dachausschnitts 12 verläuft und die beidseits angeordneten Führungsschienen 24A und 24B miteinander verbindet. Die Führungsschienen 24A und 24B bilden damit zusammen mit dem Rahmenquerteil 26 einen U-förmigen Dachrahmen. Das Rahmenquerteil 26 ist ein Kunststoffspritzgießteil aus glasfaserverstärktem Kunststoff.

Die Rolloanordnung 14 ist bezogen auf eine vertikale Dachlängsmittelebene im wesentlichen spiegelsymmetrisch ausgebildet, weshalb in der nachfolgenden Beschreibung im Wesentlichen nur auf die bezogen auf die Vorwärtsfahrtrichtung des Personenkraftwagens links angeordneten Rolloanordnungsbereiche Bezug genommen wird. Die bezogen auf die Vorwärtsfahrtrichtung des Personenkraftwagens rechts angeordneten Bereiche der Rolloanordnung sind entsprechend ausgebildet und ergeben sich in analoger Weise aus der Beschreibung.

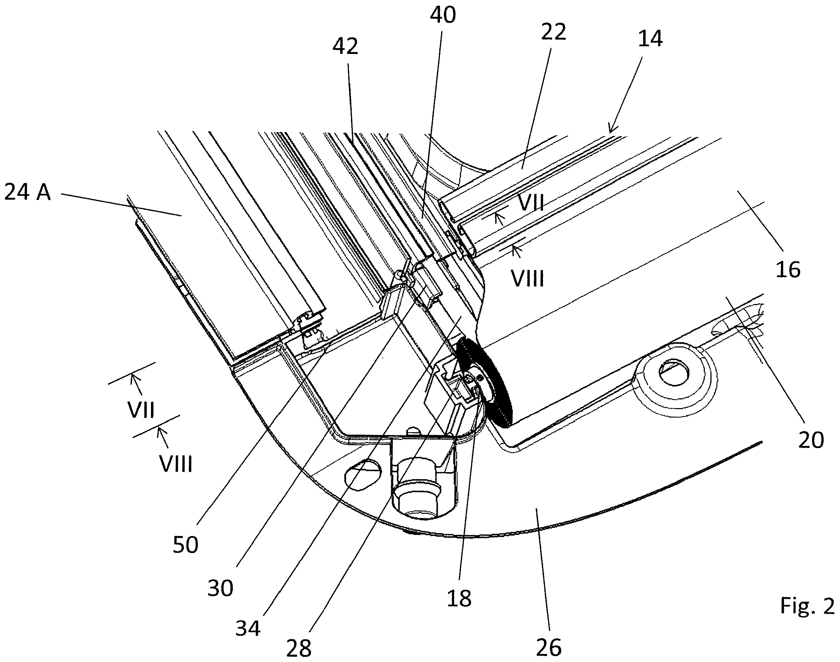

Bei der in den Figuren 2 bis 8 dargestellten ersten Ausführungsform weist das Rahmenquerteil 26 beidseits jeweils eine Lageraufnahme 28 für die Wickelwelle 18 auf. Zudem weist das Rahmenquerteil 26 angrenzend an die jeweilige Führungsschiene 24A bzw. 24B jeweils ein Bandeinlaufelement 30 auf, welches an die dem Rahmenquerteil 26 zugewandte Stirnseite der jeweiligen Führungsschiene 24A bzw. 24B grenzt. Bandführungselemente 30 gehen jeweils in eine Führungsbahn 32 der betreffenden Führungsschiene 24A bzw. 24B über. Die Bandeinlaufelemente 30 und die Führungsbahnen 32 der Führungsschienen 24A und 24B dienen dazu, jeweils ein Führungsband 34 aus Metall oder Kunststoff zu führen, mittels dessen die Rollobahn 16 an ihren bezogen auf die vertikale Dachlängsmittelebene seitlichen Rändern geführt und somit in Dachquerrichtung gespannt gehalten ist. Die Führungsbänder 34 sind an den seitlichen Rändern der Rollobahn 16 befestigt. In Figur 2 ist die Rollobahn der Anschaulichkeit halber zwischen der Führungsschiene 24A und dem Rollowickel 20 zusammen mit dem Zugspriegel 22 von dem Führungsband 34 abgehoben. Durch die Bandeinlaufelemente 30 erfolgt die Führung und Zentrierung der Rollobahn 16 schon im Bereich des Rahmenquerteils 26.

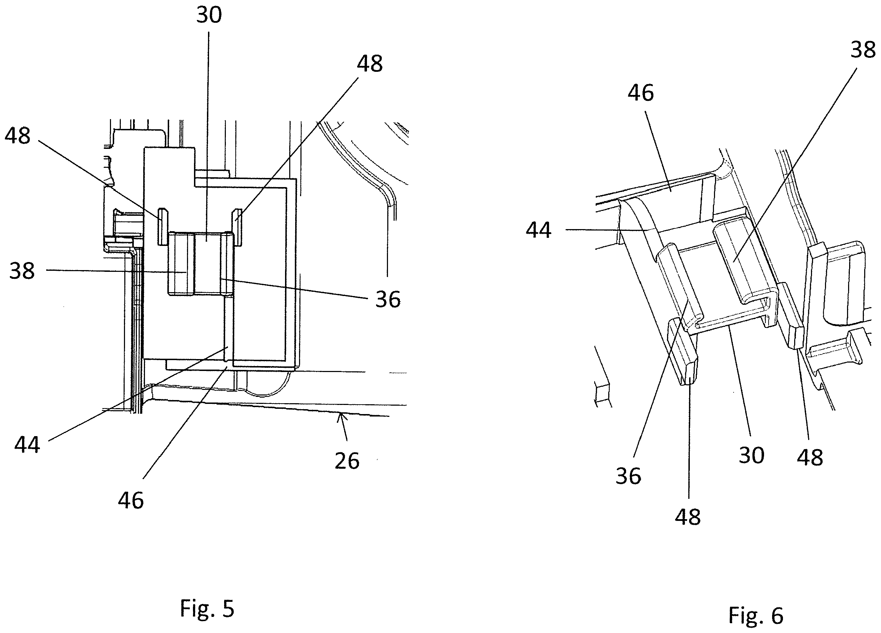

Wie insbesondere den Figuren 5 und 6 zu entnehmen ist, haben die Bandeinlaufelemente 30 jeweils bezogen auf die vertikale Dachlängsmittelebene eine innere Halterippe 36 und eine äußere Halterippe 38, welche das betreffende Führungsband 34 in dem Bandeinlaufelement 30 halten und welche an korrespondierende Führungsrippen 40 und 42 der Führungsbahn 32 der betreffenden Führungsschiene 24A bzw. 24B grenzen.

Um bei der Montage der Führungsschienen 24A und 24B einen Toleranzausgleich zwischen den Bandeinlaufelementen 30 und den zugeordneten Führungsbahnen 32 der Führungsschienen 24A und 24B realisieren zu können, sind die Bandeinlaufelemente 30 jeweils über eine Haltewand 44 mit einem Grundkörper 46 des Rahmenquerteils 26 verbunden. Die Haltewände 44 haben jeweils eine Wandstärke von 2 mm bis 4 mm und ermöglichen einen Versatz des betreffenden Bandeinlaufelements 30 in Dachquerrichtung.

Zur positionsgenauen Anbindung der Bandeinlaufelemente 30 an die Führungsschienen 24A und 24B sind an jedem Bandeinlaufelement 30 stirnseitig zwei jeweils ein Arretierelement bildende laschenartige Vorsprünge 48 ausgebildet, welche in Einbaulage an einer Wand bzw. Rippe der betreffenden Führungsschiene 24A bzw. 24B anliegen und das betreffende Bandeinlaufelement 30 gegen einen Versatz in Dachquerrichtung sichern.

Der Grundkörper 46 und die Bandeinlaufelemente 30 mit den Haltewänden 44 sind in einstückiger Weise als Kunststoffspritzgießteil ausgebildet und bestehen aus einem glasfaserverstärktem Kunststoff.

Die Rollobahn 16, die Führungsbahnen 32 und die Bandeinlaufelemente 30 der Rolloanordnung liegen in einem Trockenbereich des Dachrahmens. Um in einem im Nassbereich des Dachrahmens liegenden Übergangsbereich zwischen den Führungsschienen 24A und 24B einerseits und dem Rahmenquerteil 26 andererseits ein Eindringen von Wasser in den Fahrzeugaufbau zu verhindern, ist angrenzend an die glatt geschnittenen Stirnseiten bzw. -flächen der Führungsschienen 24A und 24B jeweils ein aus einer Butyldichtung gebildetes Dichtungselement 50 angeordnet.

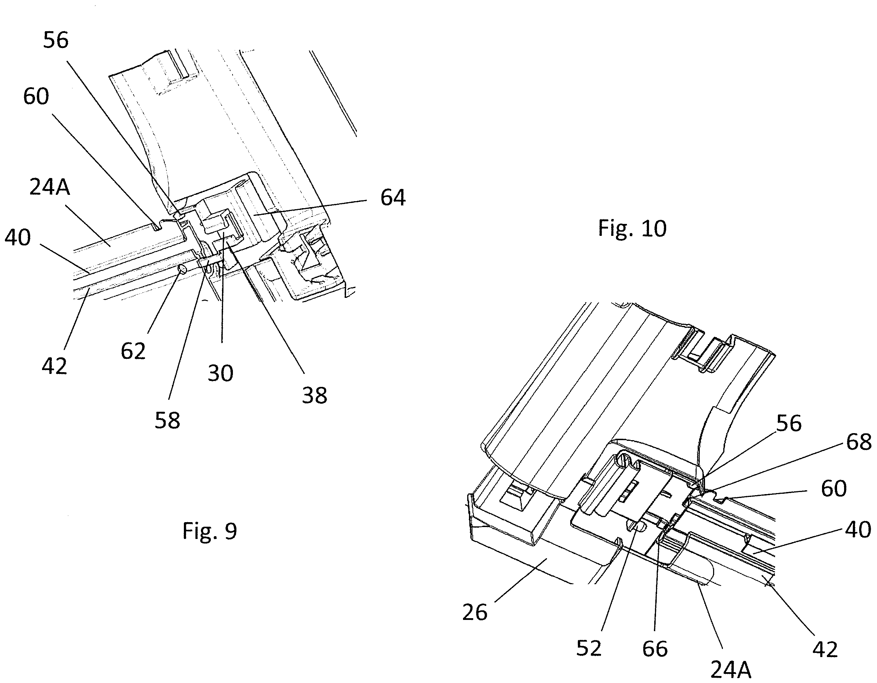

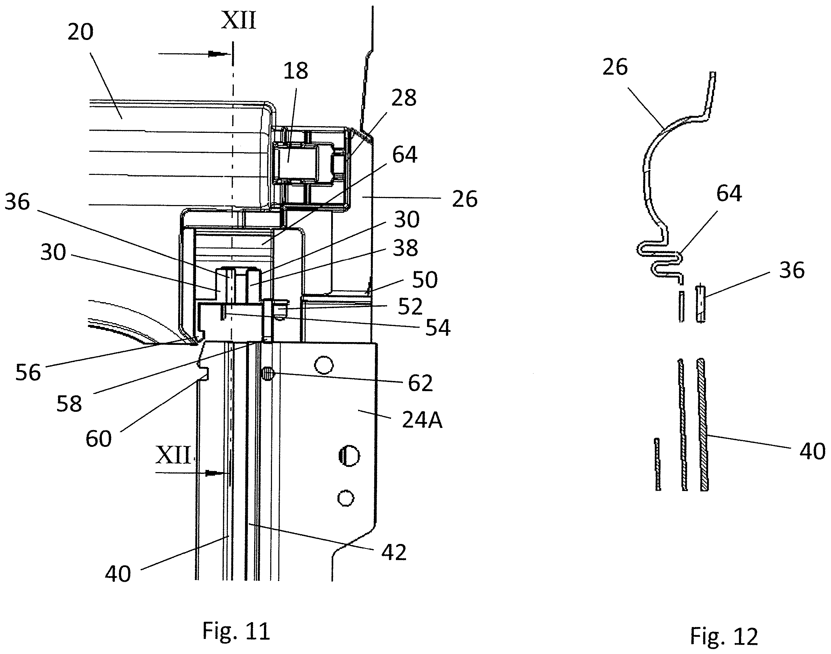

In den Figuren 9 bis 12 ist eine zweite Ausführungsform einer Rolloanordnung nach der Erfindung dargestellt, die ebenfalls Bestandteil eines Fahrzeugdachs der in Figur 1 dargestellten Art ist. Wie insbesondere Figur 9 zu entnehmen ist, umfasst diese Rolloanordnung ein Rahmenquerteil 26, das beidseits jeweils eine Lageraufnahme 28 für eine Wickelwelle 18 aufweist. Angrenzend an Führungsschienen 24A und 24B ist jeweils ein Bandeinlaufelement 30 angeordnet.

Die Bandeinlaufelemente 30, die Bestandteil des Rahmenquerteils 26 sind, gehen jeweils in eine Führungsbahn 32 der betreffenden Führungsschiene 24A bzw. 24B über. Die Bandeinlaufelemente 30 und die Führungsbahnen 32 der Führungsschienen 24A und 24B dienen dazu, ein Führungsband 34, welches aus Metall oder Kunststoff sein kann, zu führen. Die Führungsbänder 34 sind an den seitlichen Rändern der Rollobahn 16 befestigt und führen somit die Rollobahn 16 an ihren bezogen auf die vertikale Dachlängsmittelebene seitlichen Rändern, wodurch die Rollobahn 16 in Dachquerrichtung gespannt ist. Die Bandeinlaufelemente 30 ermöglichen es, die Rollobahn 16 schon im Bereich des Rahmenquerteils 26 zu führen und zu zentrieren.

Bezogen auf die vertikale Dachlängsmittelebene weisen die beidseits angeordneten Bandeinlaufelemente 30 jeweils eine innere Halterippe 36 und eine äußere Halterippe 38 auf, wobei die Halterippen 36 und 38 das betreffende Führungsband 34 in dem jeweiligen Bandeinlaufelement 30 halten und jeweils an korrespondierende Führungsrippen 40 und 42 der Führungsbahn 32 der betreffenden Führungsschiene 24A bzw. 24B grenzen.

An einer dem Rahmenquerteil 26 zugewandten Seite weisen die Bandeinlaufelemente 30 jeweils ein federndes Element 64 auf, das insbesondere in Führungsschienenlängsrichtung einen wellenförmigen Querschnitt aufweist, das also mehrfach wechselsinnig umgeschlagen ist. Durch die federnden Elemente 64 können Toleranzen zwischen den Bandeinlaufelementen 30 und der betreffenden Führungsschiene 24A bzw. 24B ausgeglichen werden, wobei insbesondere Toleranzen in Führungsschienenlängsrichtung und -hochrichtung ausgleichbar sind.

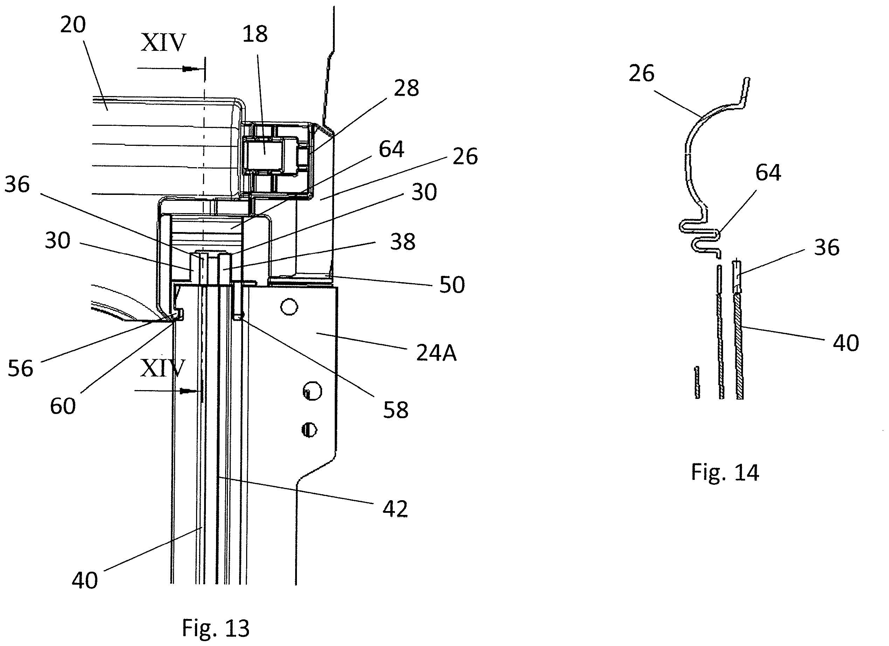

Auf einer der jeweiligen Führungsschiene 24A bzw. 24B zugewandten Seite, umfassen die Bandeinlaufelemente 30 jeweils zwei Arretierlemente in Form von Stiften 52 und 54. An den Führungsschienen 24A und 24B sind jeweils durch entsprechende Profilausgestaltung zu den Stiften 52 und 54 korrespondierende Ausnehmungen 66 und 68 ausgestaltet. In einem in den Figuren 13 und 14 dargestellten montierten Zustand sind die Stifte 52 und 54 jeweils in den korrespondierenden Ausnehmungen 66 und 68 der betreffenden Führungsschienen 24A, 24B angeordnet. Damit sind die Führungsschienen 24A und 24B jeweils exakt gegenüber zu den Bandeinlaufelementen 30 positioniert, d.h. es liegt eine definierte Relativlage vor.

Des Weiteren umfassen die Bandeinlaufelemente 30 jeweils zwei als Rastelemente ausgestaltete Arretierelemente 56 und 58. Die Führungsschienen 24A und 24B weisen jeweils ein Rastgegenelement 60 in Form einer Ausnehmung und ein Ratsgegenelement 62 in Form einer Rastnase auf. Mit Hilfe der Rastelemente 56 und 58 und der Rastgegenelemente 60 und 62 ist es möglich, die Führungsschienen 24A und 24B an den Bandeinlaufelementen 30 zu fixieren.

### Bezugszeichenliste

- 10: Fahrzeugdach
- 12: Dachausschnitt
- 14: Rolloanordnung
- 16: Rollobahn
- 18: Wickelwelle
- 20: Rollowickel
- 22: Zugspriegel
- 23: Gleiter
- 24A, B: Führungsschiene
- 26: Rahmenquerteil
- 28: Lageraufnahme
- 30: Bandeinlaufelement
- 32: Führungsbahn
- 34: Führungsband
- 36: innere Halterippe
- 38: äußere Halterippe
- 40: Führungsrippe
- 42: Führungsrippe
- 44: Haltewand
- 46: Grundkörper
- 48: laschenartiger Vorsprung
- 50: Dichtungselement
- 52: Stift
- 54: Stift
- 56: Rastelement
- 58: Rastelement
- 60: Rastgegenelement
- 62: Rastgegenelement
- 64: Haltewand
- 66: Ausnehmung
- 68: Ausnehmung

## Patentansprüche

1. Rolloanordnung eines Kraftfahrzeuges, insbesondere eines Fahrzeugdaches, umfassend eine Rollobahn (16), die in einem Wickelbereich zu einem Rollowickel (20) aufwickelbar ist, und zwei Führungsschienen (24A, 24B), welche bezogen auf eine Längsmittelebene der Rollobahn (16) beidseits angeordnet sind und jeweils eine Führungsbahn (32) aufweisen, in der ein jeweiliges seitliches Führungsband (34) der Rollobahn (16) geführt ist, und welche über ein Rahmenquerteil (26) miteinander verbunden sind, in dem der Wickelbereich für die Rollobahn (16) ausgebildet ist, wobei die Führungsschienen (24A, 24B) jeweils eine glatt geschnittene, an das Rahmenquerteil (26) grenzende Stirnseite haben und das Rahmenquerteil (26) für jede Führungsschiene (24A, 24B) ein Bandeinlaufelement (30) aufweist, das eine Einlaufbahn für das betreffende Führungsband (34) bildet, die durch mindestens eine bezogen auf die Längsmittelebene innere Halterippe (36) und mindestens eine bezogen auf die Längsmittelebene äußere Halterippe (38) für das Führungsband (34) definiert ist und die in die Führungsbahn (32) der betreffenden Führungsschiene (24A, 24B) übergeht, **dadurch gekennzeichnet, dass** die Bandeinlaufelemente (30) jeweils über eine Haltewand (44, 64) mit einem Grundkörper (46) des Rahmenquerteils (26) verbunden sind und der Grundkörper (46) und die Bandeinlaufelemente (30) mit den Haltewänden (44) in einstückiger Weise als Kunststoffspritzgießteil ausgebildet sind.

2. Rolloanordnung nach Anspruch 1, **dadurch gekennzeichnet, dass** die Haltewände (44, 64) jeweils verformbar, insbesondere elastisch verformbar sind, so dass Toleranzen zwischen dem Rahmenquerteil (26) und der jeweiligen Führungsschiene (24A, 24B) ausgeglichen sind.

3. Rolloanordnung nach Anspruch 1 oder 2, **dadurch gekennzeichnet, dass** die Haltewände (64) in Längsrichtung der Führungsschienen (24A, 24B) jeweils einen wellenförmigen Querschnitt haben.

4. Rolloanordnung nach einem der Ansprüche 1 bis 3, **dadurch gekennzeichnet, dass** die Haltewände (44, 64) jeweils eine maximale Wandstärke von etwa 4 mm haben.

5. Rolloanordnung nach einem der Ansprüche 1 bis 4, **dadurch gekennzeichnet, dass** die Bandeinlaufelemente (30) jeweils mindestens ein Arretierelement aufweisen, das in die betreffende Führungsschiene (24A, 24B) eingreift.

6. Rolloanordnung nach Anspruch 5, **dadurch gekennzeichnet, dass** die Arretierelemente jeweils aus einem Stift (52, 54) gebildet sind und an den Führungsschienen (24A, 24B) jeweils eine mit dem betreffenden Stift (52, 54) korrespondierende Aufnahme (66, 68) ausgebildet ist, wodurch die Bandeinlaufelemente (30) und die Führungsschienen (24A, 24B) eine definierte Relativlage zueinander haben.

7. Rolloanordnung nach einem der Ansprüche 5 oder 6, **dadurch gekennzeichnet, dass** die Arretierelemente jeweils ein Rastelement (56, 58) umfassen und die Führungsschienen (24A, 24B) für jedes Rastelement (56, 58) ein korrespondierendes Rastgegenelement (60, 62) aufweisen, so dass die Führungsschienen (24A, 24B) und die Bandeinlaufelemente (30) aneinander fixiert sind.

8. Rolloanordnung nach Anspruch 7, **dadurch gekennzeichnet, dass** die Rastgegenelemente (60, 62) jeweils aus einer Rastnase und/oder einer Rastausnehmung gebildet sind.

9. Rolloanordnung nach einem der Ansprüche 1 bis 8, **dadurch gekennzeichnet, dass** zwischen den glatt geschnittenen Stirnseiten der Führungsschienen (24A, 24B) und dem Rahmenquerteil (26) jeweils ein Dichtelement (50) angeordnet ist.

10. Rolloanordnung nach einem der Ansprüche 1 bis 9, **dadurch gekennzeichnet, dass** das Rahmenquerteil (26) ein Kunststoffspritzgießteil aus glasfaserverstärktem Kunststoff ist.

11. Rolloanordnung nach einem der Ansprüche 1 bis 10, **dadurch gekennzeichnet, dass** die Führungsschienen (24A, 24B) jeweils aus einem Aluminiumstrangpressprofil gebildet sind.

## Claims

1. A roller blind arrangement of a motor vehicle, in particular of a vehicle roof, the roller blind arrangement comprising a roller blind web (16), which can be wound up to form a roller blind fabric roll (20) in a winding area, and two guide rails (24A, 24B) which are disposed on either side of a longitudinal center plane of the roller blind web (16) and which comprise respective guide tracks (32) in which lateral guide strips (34) of the roller blind web (16) are guided, the guide rails (24A, 24B) being connected to each other via a transverse frame part (26) in which the winding area for the roller blind web (16) is formed, each guide rail (24A, 24B) having a clean-cut end adjacent to the transverse frame part (26), and the transverse frame part (26) having a strip infeed element (30) for each guide rail (24A, 24B), the strip infeed elements (30) forming infeed tracks for the guide strips (34), each infeed track being defined by at least one inner retaining rib (36), which is disposed closer to the longitudinal center plane, and at least one outer retaining rib (38), which is disposed further away from the longitudinal center plane, the retaining ribs (36, 38) serving to retain the guide strips (34), and the infeed tracks ending in the guide tracks (32) of the guide rails (24A, 24B), **characterized in that** each strip infeed element (30) is connected to a body (46) of the transverse frame part (26) via a support wall (44, 64), and the body (46) and the strip infeed elements (30) with the support walls (44) are realized in one piece as an injection-molded plastic part.

2. The roller blind arrangement according to claim 1, **characterized in that** the support walls (44, 64) are deformable, in particular elastically, so that tolerances between the transverse frame part (26) and the guide rails (24A, 24B) are compensated.

3. The roller blind arrangement according to claim 1 or 2, **characterized in that** the support walls (64) have a sinuous cross-section in the longitudinal direction of the guide rails (24A, 24B).

4. The roller blind arrangement according to any one of claims 1 to 3, **characterized in that** the support walls (44, 64) have a maximum wall thickness of about 4 mm.

5. The roller blind arrangement according to any one of claims 1 to 4, **characterized in that** each strip infeed element (30) has at least one locking element which engages into the associated guide rail (24A, 24B).

6. The roller blind arrangement according to claim 5, **characterized in that** each locking element is formed by a pin (52, 54), and a recess (66, 68) corresponding to the pin (52, 54) is formed on the associated guide rail (24A, 24B), the strip infeed elements (30) and the guide rails (24A, 24B) thus having a defined position relative to each other.

7. The roller blind arrangement according to any one of claims 5 or 6, **characterized in that** each locking element comprises a catch element (56, 58), and each guide rail (24A, 24B) has a mating catch element (60, 62) for each catch element (24A, 24B), the guide rails (24A, 24B) and the strip infeed elements (30) thus being fixed to each other.

8. The roller blind arrangement according to claim 7, **characterized in that** each mating catch element (60, 62) is formed by a catch lug and/or a catch recess.

9. The roller blind arrangement according to any one of claims 1 to 8, **characterized in that** a sealing element (50) is disposed between the clean-cut end of each guide rail (24A, 24B) and the transverse frame part (26).

10. The roller blind arrangement according to any one of claims 1 to 9, **characterized in that** the transverse frame part (26) is an injection-molded plastic part made of glass-fiber-reinforced plastic.

11. The roller blind arrangement according to any one of claims 1 to 10, **characterized in that** the guide rails (24A, 24B) are extruded aluminum profiles.

## Revendications

1. Ensemble de volet roulant d'un véhicule automobile, notamment d'un toit de véhicule, l'ensemble de volet roulant comprenant un lé de volet roulant (16), qui peut être enroulé en un rouleau de volet roulant (20) dans une zone d'enroulement, et deux coulisses (24A, 24B) qui sont disposées des deux côtés d'un plan central longitudinal du lé de volet roulant (16) et qui comprennent des voies de guidage (32) respectives dans lesquelles des bandes de guidage (34) latérales du lé de volet roulant (16) sont guidées, les coulisses (24A, 24B) étant reliées par une partie de cadre (26) transverse dans laquelle la zone d'enroulement pour le lé de volet roulant (16) est formée, chaque coulisse (24A, 24B) ayant une extrémité coupée nettement adjacent à la partie de cadre (26) transverse et la partie de cadre (26) transverse ayant un élément d'entrée de bande (30) pour chaque coulisse (24A, 24B), les éléments d'entrée de bande (30) formant des voies d'entrée pour les bandes de guidage (34), chaque voie d'entrée étant définie par au moins une nervure de fixation (36) intérieure par rapport au plan central longitudinal et au moins une nervure de fixation (38) extérieure par rapport au plan central longitudinal pour la bande de guidage (34) et les voies d'entrée étant en continuité avec les voies de guidage (32) des coulisses (24A, 24B), **caractérisé en ce que** chaque élément d'entrée de bande (30) est relié avec un corps (46) de la partie de cadre (26) transverse par une paroi de fixation (44, 64) et le corps (46) et les éléments d'entrée de bande (30) avec les parois de fixation (44) sont réalisés en une pièce comme pièce en matière plastique moulée par injection.

2. Ensemble de volet roulant selon la revendication 1, **caractérisé en ce que** les parois de fixation (44, 64) sont déformables, notamment de manière élastique, de sorte que des tolérances entre la partie de cadre (26) transverse et les coulisses (24A, 24B) sont compensées.

3. Ensemble de volet roulant selon la revendication 1 ou 2, **caractérisé en ce que** les parois de fixation (64) ont une section transversale ondulée dans la direction longitudinale des coulisses (24A, 24B).

4. Ensemble de volet roulant selon l'une quelconque des revendications 1 à 3, **caractérisé en ce que** les parois de fixation (44, 64) one une épaisseur de paroi maximale d'environ 4 mm.

5. Ensemble de volet roulant selon l'une quelconque des revendications 1 à 4, **caractérisé en ce que** chaque élément d'entrée de bande (30) a au moins un élément d'arrêt qui vient en prise dans la coulisse (24A, 24B) respective.

6. Ensemble de volet roulant selon la revendication 5, **caractérisé en ce que** chaque élément d'arrêt est formé par une goupille (52, 54) et un évidement (66, 68) correspondant à la goupille (52, 54) est formé sur la coulisse (24A, 24B) respective, les éléments d'entrée de bande (30) et les coulisses (24A, 24B) ayant ainsi une position relative définie les uns par rapport aux autres.

7. Ensemble de volet roulant selon l'une quelconque des revendications 5 ou 6, **caractérisé en ce que** chaque élément d'arrêt comprend un élément d'encliquetage (56, 58) et les coulisses (24A, 24B) ont un contre-élément d'encliquetage (60, 62) correspondant pour chaque élément d'encliquetage (24A, 24B) de sorte que les coulisses (24A, 24B) et les éléments d'entrée de bande (30) sont fixés les uns aux autres.

8. Ensemble de volet roulant selon la revendication 7, **caractérisé en ce que** chaque contre-élément d'encliquetage (60, 62) est formé par un ergot d'encliquetage et/ou un évidement d'encliquetage.

9. Ensemble de volet roulant selon l'une quelconque des revendications 1 à 8, **caractérisé en ce qu'**un élément d'étanchéité (50) est disposé entre l'extrémité coupée nettement de chaque coulisse (24A, 24B) et la partie de cadre (26) transverse.

10. Ensemble de volet roulant selon l'une quelconque des revendications 1 à 9, **caractérisé en ce que** la partie de cadre (26) transverse est une pièce en matière plastique moulée par injection en matière plastique renforcée par des fibres de verre.

11. Ensemble de volet roulant selon l'une quelconque des revendications 1 à 10, **caractérisé en ce que** les coulisses (24A, 24B) sont des profils extrudés en aluminium.
